# DEMANDE DE BREVET EUROPEEN

(11) **EP 3 869 663 A1**
(43) Date de publication de la demande: **25.08.2021**
(21) Numéro de dépôt: 21158085.7
(22) Date de dépôt: 19.02.2021
(51) Int. Cl.: H02J 7/34, B60L 53/20, B60L 58/40

(54) **SYSTÈMES D'ALIMENTATION ÉLECTRIQUE ET VÉHICULE ÉLECTRIQUE ASSOCIÉ**

(30) Priorité: 20.02.2020 FR 2001690
(71) Demandeur: ALSTOM Transport Technologies, 93400 Saint-Ouen-sur-Seine (FR)
(72) Inventeur: ROUILLE, Bruno, 65200 ORDIZAN (FR)
(74) Mandataire: Lavoix

(57) **Abrégé**

Un système d'alimentation électrique (4), notamment pour un véhicule électrique (2), comporte un premier dispositif d'alimentation en énergie électrique (20), une pile à combustible (24) et un dispositif de conversion de puissance (14) apte à alimenter électriquement une charge électrique (6).

Le dispositif de conversion comprend un bus d'alimentation (52) et un convertisseur de puissance (34), dans lequel :
- le premier dispositif d'alimentation est raccordé au bus d'alimentation,
- la pile à combustible est raccordée au bus d'alimentation par l'intermédiaire du convertisseur de puissance,
- le convertisseur de puissance inclut au moins une première diode (D1), et
- le système d'alimentation et notamment le dispositif de conversion de puissance est configuré pour forcer un courant fourni par la pile à combustible, lorsqu'elle est utilisée comme source d'énergie pour alimenter le dispositif de conversion de puissance, à passer par ladite première diode.

## Description

La présente invention concerne des systèmes d'alimentation électrique et notamment des procédés pour piloter de tels systèmes d'alimentation électrique.

L'invention est notamment applicable aux systèmes d'alimentation électrique utilisés dans des véhicules électriques.

Les véhicules électriques, et plus particulièrement les véhicules ferroviaires à traction électrique, comportent pour certaines applications, un système de stockage d'électricité, tel qu'une ou plusieurs batteries de traction.

Dans certains cas, la chaîne de traction du véhicule doit pouvoir être alimentée lorsque le véhicule n'est pas approvisionné en électricité par une source extérieure, par exemple lorsque le véhicule circule dans une zone dépourvue de caténaire ou de rail d'alimentation.

Il est courant d'ajouter une pile à combustible dans le système de stockage d'électricité afin de fournir une alimentation électrique en complément de la batterie de traction et ainsi augmenter l'autonomie du véhicule. Le document US 2016/375791 A1 décrit un exemple d'un tel système d'alimentation électrique.

Pour éviter d'endommager la pile à combustible, il est courant d'ajouter une diode de protection intercalée entre la sortie de la pile à combustible et le reste du système d'alimentation électrique, afin d'empêcher tout retour de courant vers la pile à combustible.

Cependant, en pratique, la présence d'une telle diode présente de nombreux inconvénients. En particulier, la diode entraîne des pertes énergétiques importantes, pouvant aller jusqu'à plusieurs centaines de watts, compte tenu des courants élevés en sortie de la pile à combustible. Ces pertes réduisent l'efficacité de la pile à combustible et entraînent une surconsommation d'hydrogène. De plus, comme cette puissance perdue est dissipée thermiquement, il est nécessaire de prévoir des moyens de refroidissement, tels qu'un échangeur de chaleur et/ou un ventilateur. De tels moyens de refroidissement augmentent la masse du système d'alimentation, sont coûteux à installer et, en plus, occupent une place importante. Cette place n'est pas toujours facile à trouver lorsque le système d'alimentation doit être embarqué dans un véhicule, de sorte que le système d'alimentation s'en trouve plus compliqué à intégrer.

C'est à ces inconvénients qu'entend plus particulièrement remédier l'invention, en proposant un système d'alimentation électrique amélioré, notamment pour un véhicule électrique, comportant une batterie et une pile à combustible.

A cet effet, selon un aspect, un système d'alimentation électrique, notamment pour un véhicule électrique, comporte un premier dispositif d'alimentation en énergie électrique, une pile à combustible et un dispositif de conversion de puissance apte à alimenter électriquement une charge électrique, le dispositif de conversion de puissance comprenant un bus d'alimentation et un convertisseur de puissance, dans lequel :
- le premier dispositif d'alimentation est raccordé au bus d'alimentation,
- la pile à combustible est raccordée au bus d'alimentation par l'intermédiaire du convertisseur de puissance,
- le convertisseur de puissance inclut au moins une première diode, et
- le système d'alimentation et notamment le dispositif de conversion de puissance est configuré pour forcer un courant fourni par la pile à combustible, lorsqu'elle est utilisée comme source d'énergie pour alimenter le dispositif de conversion de puissance, à passer par ladite première diode.

Grâce à l'invention, il n'est pas nécessaire d'installer une diode de protection en sortie de la pile à combustible. A la place, on utilise la diode associée à l'un des interrupteurs de puissance du deuxième convertisseur, ce dernier étant configuré de manière à ce que l'interrupteur reste ouvert et force le courant électrique à passer par la diode. Ainsi, la pile à combustible est convenablement protégée, tout en évitant les désavantages liés à l'utilisation d'une diode dédiée en sortie de la pile à combustible.

De cette manière, le système d'alimentation électrique est plus fiable, plus efficace et plus simple à intégrer.

Selon des aspects avantageux mais non obligatoires, un tel système d'alimentation électrique peut incorporer une ou plusieurs des caractéristiques suivantes, prises isolément ou suivant toute combinaison techniquement admissible :
- Le convertisseur de puissance comporte un premier interrupteur de puissance, la première diode connectée en parallèle avec le premier interrupteur de puissance, un deuxième interrupteur de puissance et une deuxième diode connectée en parallèle avec le deuxième interrupteur de puissance, la première diode étant configurée pour empêcher le retour du courant vers la pile à combustible, et dans lequel le système d'alimentation électrique est configuré pour maintenir le premier interrupteur de puissance dans un état électriquement ouvert tant que la pile à combustible alimente le dispositif de conversion de puissance.
- Le système d'alimentation électrique comporte en outre un dispositif électronique de commande des premier et deuxièmes interrupteurs de puissance, le dispositif électronique de commande étant configuré pour maintenir le premier interrupteur de puissance dans l'état électriquement ouvert tant que la pile à combustible alimente le dispositif de conversion de puissance.
- Le système d'alimentation électrique est configuré pour maintenir le premier interrupteur de puissance dans l'état électriquement ouvert uniquement tant que la pile à combustible alimente le dispositif de conversion de puissance.
- Le premier interrupteur de puissance est configuré pour rester en permanence dans l'état électriquement ouvert.
- Le système d'alimentation électrique comporte en outre un dispositif électronique de commande des premier et deuxièmes interrupteurs de puissance, le premier interrupteur de puissance étant déconnecté du dispositif électronique de commande et une électrode de commande du premier interrupteur de puissance étant maintenue à une tension électrique de maintien du premier interrupteur de puissance dans l'état électriquement ouvert.
- Le convertisseur de puissance comporte la première diode connectée en série avec un ensemble formé d'un interrupteur de puissance et d'une deuxième diode connectés en parallèle, la première diode étant connectée électriquement entre la pile à combustible et le bus d'alimentation et dans lequel le convertisseur de puissance est dépourvu d'interrupteur de puissance connecté en parallèle de la première diode.
- Une des bornes de la pile à combustible est connectée à un point milieu entre la première diode et la deuxième diode par l'intermédiaire d'un conducteur comportant une inductance.
- Le convertisseur de puissance est un hacheur élévateur de tension.

Selon un autre aspect, l'invention concerne un véhicule électrique, notamment ferroviaire, comportant une charge électrique, telle qu'un moteur d'une chaîne de traction, et un système d'alimentation électrique pour alimenter ladite charge électrique, caractérisé en ce que le système d'alimentation électrique est telle que précédemment décrite.

L'invention sera mieux comprise et d'autres avantages de celle-ci apparaîtront plus clairement à la lumière de la description qui va suivre d'un mode de réalisation d'un système d'alimentation électrique donnée uniquement à titre d'exemple et faite en référence aux dessins annexés, dans lesquels :
[Fig 1] la figure 1 est un schéma d'un système d'alimentation électrique pour un véhicule ferroviaire conforme à des modes de réalisation de l'invention comportant une pile à combustible ;
[Fig 2] la figure 2 est un schéma électrique équivalent du système d'alimentation électrique de la figure 1 lorsque l'alimentation électrique est fournie par la pile à combustible ;
[Fig 3] la figure 3 est un diagramme illustrant des étapes d'un procédé de pilotage du système d'alimentation électrique de la figure 1 conformément à des modes de réalisation ;
[Fig 4] la figure 4 est un diagramme représentant l'évolution de grandeurs électriques lors du fonctionnement du système d'alimentation électrique dans un premier mode de fonctionnement ;
[Fig 5] la figure 5 est un diagramme représentant l'évolution de grandeurs électriques lors du fonctionnement du système d'alimentation électrique dans un deuxième mode de fonctionnement.

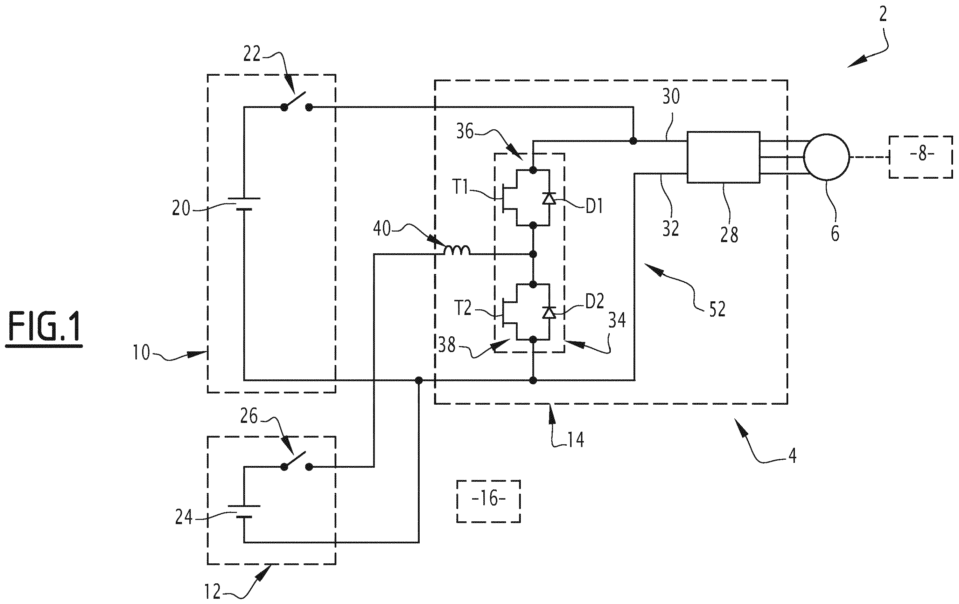

Sur la figure 1 est représenté un véhicule électrique 2 comportant un système d'alimentation électrique 4.

Le véhicule électrique 2 peut être véhicule ferroviaire à traction électrique.

Selon des exemples non limitatifs, le véhicule ferroviaire peut être un train de passagers, ou un train à grande vitesse, ou une locomotive, ou un véhicule de service tel qu'une draisine ou un locotracteur, ou un véhicule de transport urbain tel qu'un métro ou un tramway.

En variante, le véhicule 2 peut être un véhicule électrique routier, tel qu'un autobus électrique ou un camion électrique.

Selon des exemples, le véhicule 2 comporte une chaîne de traction électrique comprenant un ou plusieurs moteurs électriques 6 préférablement configurés pour entraîner le véhicule en déplacement le long d'une voie.

Dans l'exemple illustré, le ou chaque moteur 6 est couplé mécaniquement à un dispositif d'entrainement 8 du véhicule, tel qu'une ou plusieurs roues d'un bogie ou d'un essieu moteur.

En variante, la chaîne de traction peut comporter un ou plusieurs dispositifs d'entrainement de natures différentes.

De façon générale, le dispositif d'alimentation 4 peut être configuré pour alimenter n'importe quelle charge électrique autre qu'un moteur 6.

Selon des modes de réalisation, le véhicule 2 peut également comporter un système de collecte de courant configuré pour collecter un courant électrique fourni par une source d'alimentation extérieure et pour alimenter la chaîne de traction avec le courant électrique collecté.

Par exemple, le système de collecte peut comporter un pantographe ou un patin configuré pour coopérer avec, respectivement, une caténaire ou un rail d'alimentation, ou tout moyen équivalent.

En variante, le système de collecte peut comporter une prise apte à coopérer avec une borne de chargement électrique.

Selon d'autres variantes, le système de collecte peut comprendre un système de couplage par induction ou une antenne radio.

Comme illustré sur la figure 1, le système d'alimentation électrique 4 comporte un premier dispositif d'alimentation en énergie électrique 10, un deuxième dispositif d'alimentation en énergie électrique 12, un dispositif de conversion de puissance 14 et un dispositif électronique de commande 16 configuré pour piloter le dispositif de conversion de puissance 14.

Le premier dispositif d'alimentation 10 comporte une batterie 20. Le premier dispositif d'alimentation est propre à stocker de l'énergie électrique fournie par la source d'alimentation extérieure via le système de collecte ou lors de phase de freinage du véhicule, et à restituer ladite énergie.

Selon des modes de réalisation, la batterie 20 est apte à stocker de l'énergie pour alimenter électriquement au moins en partie le véhicule 2, et notamment pour alimenter le dispositif de conversion 14, lorsque le véhicule 2 n'est pas alimenté par une source d'alimentation extérieure. C'est par exemple le cas d'un véhicule ferroviaire qui circule sur une portion de voie dépourvue de caténaire ou de rail d'alimentation.

Par exemple, la batterie 20 peut comporter une batterie d'accumulateurs électrochimiques.

En variante, la batterie 20 peut comporter un ensemble de condensateurs ou de super-condensateurs, ou toute technologie appropriée de stockage d'électricité.

Selon un exemple non limitatif, la batterie 20 présente une tension supérieure ou égale à 750V DC entre ses bornes lorsqu'elle est chargée.

Par exemple, un interrupteur 22 est placé en sortie de la batterie 20, pour sélectivement connecter ou déconnecter la batterie 20 (et le premier dispositif 10) du dispositif de conversion 14.

Le deuxième dispositif d'alimentation 12 comporte une pile à combustible 24.

Avantageusement, le deuxième dispositif d'alimentation 12 ne comporte aucune diode de protection dédiée en sortie de la pile à combustible 24.

La pile à combustible 24 est apte à générer de l'électricité pour alimenter le circuit d'alimentation 14 (et in fine alimenter le ou chaque moteur 6) et ainsi fournir une source d'énergie auxiliaire embarquée à bord du véhicule 2, par exemple lorsque ce dernier n'est pas alimenté par une source d'alimentation extérieure, notamment pour alimenter le dispositif de conversion 14.

Par exemple, la pile à combustible 24 peut être alimentée par un réservoir d'hydrogène, non illustré, embarqué à bord du véhicule 2.

Selon un exemple non limitatif, la tension électrique aux bornes de la pile à combustible 24 lorsqu'elle est en fonctionnement est supérieure ou égale à 400V DC.

Par exemple, un interrupteur 26 est placé en sortie de la pile à combustible 24, pour sélectivement connecter ou déconnecter la pile à combustible 24 (et le deuxième dispositif 12) du dispositif de conversion 14.

Le dispositif 14 est notamment configuré pour alimenter électriquement le ou chaque moteur 6, grâce à l'électricité fournie par les dispositifs d'alimentation 10 et/ou 12, voire, le cas échéant, par le système de collecte (non illustré).

Dans de nombreux modes de réalisation, le dispositif 14 comporte un convertisseur de puissance 28, par exemple un convertisseur continu-alternatif (DC-AC), qui ici alimente le ou chaque moteur 6.

Les bornes d'entrée 30, 32 du convertisseur 28 sont connectées à un bus d'alimentation continu auquel sont raccordés les dispositifs 10 et 12.

Par exemple, les bornes de la batterie 20 sont raccordées aux bornes 30 et 32, même si dans certaines variantes, la batterie 20 peut ne pas être connectée directement aux bornes 30 et 32. Au contraire, la batterie 20 peut être connectée à un autre convertisseur de puissance continu-continu propre à élever la tension à une valeur de tension compatible avec le convertisseur de puissance 28.

Selon des exemples, les bornes de la pile à combustible 24 sont raccordées aux bornes 30 et 32 par l'intermédiaire d'un deuxième convertisseur de puissance 34 continu-continu, de préférence un convertisseur de puissance élévateur en tension.

Par exemple, le convertisseur 34 est un hacheur élévateur.

Selon des modes de réalisation, le convertisseur 34 comporte un premier module de puissance 36 et un deuxième module de puissance 38 connectés en série.

Le premier module 36 comporte un premier interrupteur de puissance T1 et une première diode D1, connectée en parallèle avec le premier interrupteur de puissance T1.

Le deuxième module 38 comporte un deuxième interrupteur de puissance T2 et une deuxième diode D2, connectée en parallèle avec le deuxième interrupteur de puissance T2. De façon connue, chacune des diodes D1 et D2 empêche le courant de circuler depuis sa cathode vers son anode, et permet au courant de circuler dans l'autre sens même si le premier interrupteur de puissance T1 n'est pas commandé.

Les interrupteurs de puissance T1 et T2 peuvent être des transistors, notamment des transistors bipolaires à grille isolée (IGBT) ou des MOSFET (par exemple à base de carbure de silicium SIC).

Dans des modes de réalisation, les interrupteurs de puissance T1 et T2 sont pilotés par le dispositif de commande 16.

Dans ce qui suit, les interrupteurs de puissance T1 et T2 sont nommés « transistors », sans préjudice ni limitation de la technologie utilisée.

Les diodes D1 et D2 sont configurées pour autoriser la circulation du courant uniquement en direction du convertisseur 28 (par exemple en direction de la borne 30). En particulier, la première diode D1 est configurée pour empêcher le retour du courant vers la pile à combustible 24.

Selon des modes de mise en œuvre, l'une des bornes du convertisseur 34 (par exemple celle correspondant au collecteur du premier transistor T1) est connectée à la borne 30. L'autre borne du convertisseur 34 (par exemple celle correspondant à l'émetteur du deuxième transistor T2) est connectée à la borne 32.

Dans l'exemple illustré, l'une des bornes de la pile à combustible 24 (par exemple la borne positive) est connectée à un point milieu du convertisseur 34 par un conducteur comportant une inductance 40.

Le point milieu est par exemple le point de raccordement entre les premier et deuxième modules 36 et 38 (par exemple, entre l'émetteur du premier transistor T1 et le collecteur du deuxième transistor T2).

L'autre borne de la pile à combustible 24 (par exemple la borne négative) est connectée à la deuxième borne 32.

Selon un exemple non limitatif donné à des fins d'illustration, l'inductance 40 peut avoir une valeur de 0,55mH, même si en pratique la valeur peut être choisie différemment, notamment en fonction de l'amplitude de l'ondulation de courant acceptable par la pile à combustible 24.

De préférence, le conducteur comportant l'inductance 40 est dépourvu de diode de protection. En particulier, le dispositif 12 est dépourvu (ne comporte pas) de diode de protection en sortie de la pile à combustible 24.

Dans de nombreux modes de réalisation, le système d'alimentation 4 est configuré pour forcer le courant à passer par la première diode D1 lorsque la pile à combustible 24 est utilisée comme source d'énergie pour alimenter le dispositif 14, par exemple en bloquant le premier transistor T1 en position ouverte.

En d'autres termes, le système d'alimentation 4 ne comporte pas de diode de protection dédiée en sortie de la pile à combustible 24. A la place, on utilise la diode D1 déjà présente dans le convertisseur 34, en neutralisant le transistor T1 associé à la diode D1.

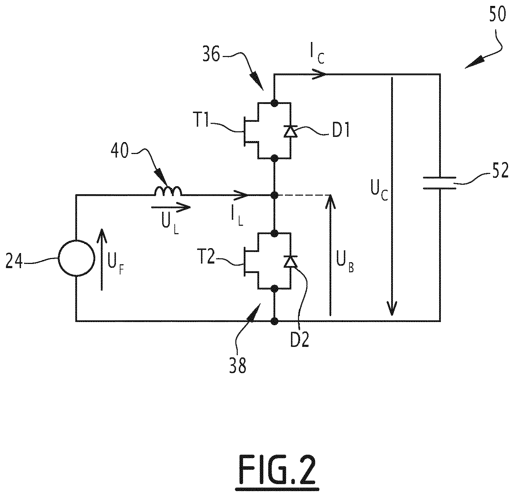

La figure 2 représente un schéma électrique équivalent 50 au système d'alimentation 4 lorsque ce dernier force le courant à passer par la diode D1.

Les références U_{F}, U_{L}, U_{B} et Uc désignent respectivement la tension électrique aux bornes de la pile à combustible 24, la tension électrique aux bornes de l'inductance 40, la tension électrique aux bornes du deuxième module de puissance 38 (ici entre le point milieu et la deuxième borne 32) et la tension électrique aux bornes du bus d'alimentation continu 52 (ici entre les bornes 30 et 32).

Les références I_{L} et I_{C} désignent respectivement le courant électrique fourni par la pile à combustible 24 et le courant électrique circulant sur le bus d'alimentation continu 52 (aussi nommé bus de traction).

Selon des modes de réalisation préférés, un tel fonctionnement du système d'alimentation 4 est obtenu grâce à l'action du dispositif de commande 16 qui pilote le convertisseur 34 pour que le premier interrupteur T1 reste ouvert (c'est-à-dire dans un état électriquement bloquant empêchant le passage du courant) tant que la pile à combustible 24 alimente électriquement le dispositif de conversion 14.

Le courant électrique circulant entre la pile à combustible 24 et la borne 30 du convertisseur 28 est donc forcé de passer par la première diode D1. De par sa configuration, la diode D1 empêche le courant électrique de remonter vers la pile à combustible 24.

Dans de nombreux modes de réalisation, le dispositif de commande 16 est implémenté par un circuit électronique, par exemple monté sur une carte électronique.

Par exemple, le dispositif de commande 16 comporte un processeur, tel qu'un microcontrôleur programmable, et une mémoire informatique couplée au processeur et formant un support d'enregistrement de données lisible par ordinateur.

Selon des exemples, la mémoire est une mémoire morte ROM, ou une mémoire vive RAM, ou une mémoire non volatile de type EPROM, ou EEPROM, ou Flash, ou toute technologie de mémoire appropriée, ou toute combinaison possible de ces technologies de mémoire.

La mémoire comporte des instructions exécutables et/ou un code logiciel notamment pour mettre en œuvre un procédé de pilotage du convertisseur 34 lorsque ces instructions sont exécutées par le processeur.

En variante, le dispositif de commande 16 comporte un composant logique programmable (FPGA) ou un circuit intégré dédié configuré pour mettre en œuvre de tels procédés.

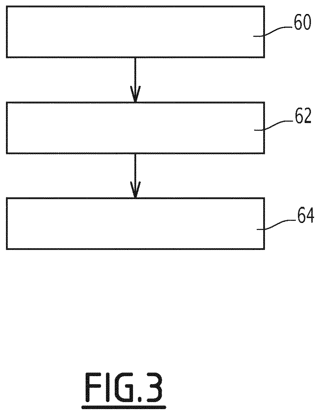

Notamment, le dispositif de commande 16 est programmé pour mettre en œuvre un procédé de pilotage tel qu'illustré sur la figure 3.

Selon des modes de réalisation, lors d'une étape 60, la pile à combustible 24 est activée pour alimenter le système d'alimentation 4, par exemple pour alimenter le ou les moteurs 6 du véhicule 2.

Par exemple, lors de cette étape 60, l'interrupteur 22 est maintenu fermé pour maintenir la batterie 20 connectée au dispositif de conversion et notamment fixer la tension sur le bus d'alimentation continu 52 et l'interrupteur 26 est fermé pour connecter la pile à combustible 24 au système d'alimentation 4 et notamment au dispositif de conversion 14.

Lors d'une étape 62, le transistor T1 reste ouvert pour que le courant électrique traversant le premier module 36 passe obligatoirement par la diode D1.

Lors d'une étape 64, le dispositif de commande 16 maintient le transistor T1 dans un état ouvert, quel que soit l'état du deuxième transistor T2. Par exemple, le dispositif de commande 16 peut continuer à piloter le deuxième transistor T2 pour l'ouvrir et le fermer en alternance, avec une fréquence de commutation prédéfinie, par exemple pour que le convertisseur 34 soit capable de fonctionner en tant qu'élévateur de tension. Le transistor T2 permet d'emmagasiner de l'énergie dans l'inductance 40, via la commande en fermeture du deuxième transistor T2 et de la restituer au bus d'alimentation continu 52, via la commande en ouverture du deuxième transistor T2.

Avantageusement, dans le système d'alimentation 4, le dispositif de commande 16 n'est pas connecté au premier transistor T1 et n'est notamment pas connecté à l'électrode de commande du premier transistor T1 de sorte que le transistor T1 n'est jamais commandé et est équivalent à un interrupteur ouvert.

L'étape 64 peut être répétée au cours du temps, tant que la pile à combustible 24 alimente le système 4.

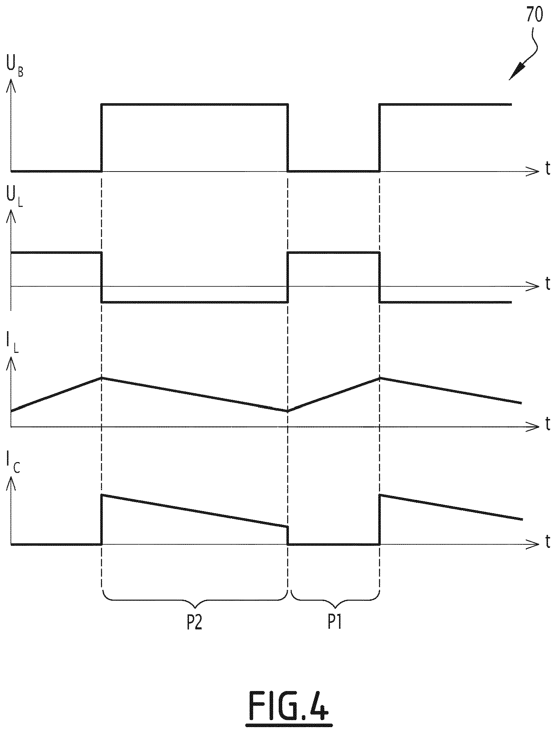

Sur la figure 4, le graphique 70 illustre l'évolution des tensions électriques U_{B} et U_{L} et des courants électriques I_{L} et I_{C} au cours du temps (t) selon un exemple de fonctionnement du système 4 dans un premier cas d'application.

Lors d'une première phase de fonctionnement P1, le deuxième transistor T2 est fermé. L'inductance 40 se charge en énergie. La tension U_{B} est nulle, tandis que la tension U_{L} est égale à sa valeur maximale (la tension de la pile à combustible). Le courant I_{L} débité par la pile à combustible 24 augmente jusqu'à atteindre sa valeur maximale. Le courant I_{C} fourni au bus de traction est nul. A la fin de la phase P1, le transistor T2 est ouvert.

Lors d'une seconde phase de fonctionnement P2, le deuxième transistor T2 est dans l'état ouvert. La pile à combustible 24 débite un courant I_{L} pour alimenter le bus de traction et l'inductance 40 se décharge en énergie. Par exemple, le courant I_{L} est égal au courant I_{C}. La tension U_{B} entre les bornes du deuxième module de puissance 38 est égale à sa valeur maximale, par exemple égale à la tension Uc présente sur le bus d'alimentation continu 52 (qui est aussi la tension batterie), tandis que la tension U_{L} aux bornes de l'inductance 40 est égale à la différence Uc - Uf. Le courant I_{L} débité par la pile à combustible 24 diminue depuis sa valeur maximale vers sa valeur minimale. Le courant I_{C} fourni au bus de traction suit une évolution similaire.

Pendant les phases P1 et P2, le premier transistor T1 reste dans l'état ouvert, c'est-à-dire qu'il empêche le passage du courant.

En pratique, les phases de fonctionnement P1 et P2 se succèdent et sont répétées l'une après l'autre périodiquement au cours du temps pendant le fonctionnement du système 4.

Dans ce premier cas d'application, le courant I_{L} débité par la pile à combustible 24 conserve en permanence une valeur strictement positive.

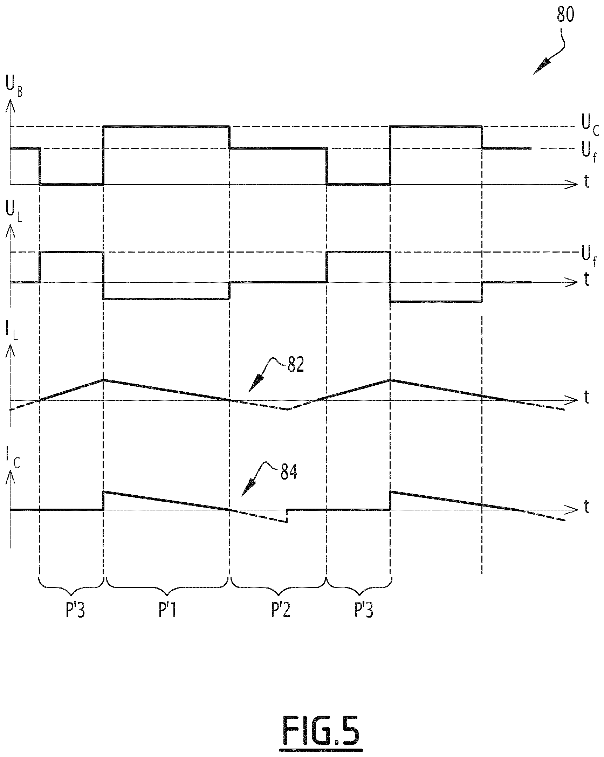

Sur la figure 5, le graphique 80 illustre l'évolution des tensions électriques U_{B} et U_{L} et des courants électriques I_{L} et I_{C} au cours du temps (t) selon un exemple de fonctionnement du système 4 dans un deuxième cas d'application.

Le deuxième cas d'application correspond par exemple à un cas où la valeur du courant I_{L} provenant de la pile à combustible 24 présente une amplitude faible, par exemple proche de zéro (par exemple, inférieure ou égale à 1 Ampère).

Cependant, le courant I_{L} débité par la pile à combustible 24 conserve malgré tout en permanence une valeur supérieure ou égale à zéro, notamment grâce à l'action de la première diode D1 du module de puissance 36. En d'autres termes, le courant I_{L} débité par la pile à combustible 24 n'est pas négatif.

Par exemple, comme illustré sur la figure 5, le deuxième cas d'application comporte trois phases de fonctionnement successives, notées P'1, P'2 et P'3. A l'instar des phases de fonctionnement P1 et P2 du premier cas d'application, les phases de fonctionnement P'1, P'2 et P'3 se succèdent et sont répétées l'une après l'autre périodiquement au cours du temps pendant le fonctionnement du système 4.

Par exemple, les phases de fonctionnement P'3 et P'1 sont respectivement analogues à la première phase de fonctionnement P1 et à la deuxième phase de fonctionnement P2 précédemment décrites.

Lors de la phase P'1, la pile à combustible 24 débite un courant I_{L} pour alimenter le bus de traction et l'inductance 40 se décharge.

Puis, lors de la phase P'2, l'inductance 40 cesse de se décharger. Le courant I_{L} atteint une valeur nulle. La tension U_{L} aux bornes de l'inductance 40 est alors égale à zéro. La tension U_{B} se stabilise à une valeur égale à la tension U_{F} présente entre les bornes de la pile à combustible 24.

Les courants I_{L} et I_{C} deviennent alors égaux à zéro et ne prennent pas de valeur négative (ne changent pas de sens de circulation), car ils sont bloqués par la première diode D1 et ne peuvent pas passer par le transistor T1, qui est alors ouvert.

Sur la figure 5, les traits pointillés portant les références 82 et 84 illustrent l'évolution que suivraient respectivement les courants I_{L} et I_{C} si le premier transistor T1 n'était pas maintenu ouvert. On constate que ces deux courants I_{L} et I_{C} prendraient des valeurs négatives, et notamment que le courant I_{L} changerait de sens pour circuler vers la pile à combustible 24, ce qui doit être évité pour ne pas endommager la pile à combustible 24.

Puis, lors de la phase P'3, le deuxième transistor T2 est refermé. L'inductance 40 se charge, et les courants et tensions suivent une évolution similaire à celle précédemment décrite pour la phase P1. A la fin de la phase P'3, le deuxième transistor T2 est rouvert.

Pendant les phases P'1, P'2 et P'3, le premier transistor T1 reste dans l'état ouvert, obligeant le courant à passer par la diode D1.

Grâce à l'invention, il n'est pas nécessaire d'installer une diode de protection en sortie de la pile à combustible. A la place, on utilise la diode associée à l'un des interrupteurs de puissance du deuxième convertisseur, ce dernier étant configuré de manière à ce que l'interrupteur reste ouvert et force le courant électrique à passer par la diode. Ainsi, la pile à combustible est convenablement protégée, tout en évitant les désavantages liés à l'utilisation d'une diode dédiée en sortie de la pile à combustible.

De cette manière, le système d'alimentation électrique est plus fiable, plus efficace et plus simple à intégrer.

De nombreux modes de réalisation sont possibles, notamment en ce qui concerne le fonctionnement du transistor T1.

Dans certains exemples, le premier transistor T1 peut être piloté par le dispositif de commande 16 de sorte à n'être maintenu dans un état électriquement ouvert uniquement tant que la pile à combustible 24 alimente le dispositif 14. Par exemple, une tension de commande prédéfinie est appliquée sur une électrode de commande du premier transistor T1 (par exemple, sur la grille du transistor T1). Les étapes 60, 62 et 64 décrites ci-dessus sont alors adaptées en conséquence.

Cependant, selon des modes de réalisation préférés et décrits en référence à la figure 3, le système 4 d'alimentation 4 est configuré pour que le premier transistor T1 reste en permanence dans un état électriquement ouvert même lorsque la pile à combustible 24 n'alimente plus le dispositif 14.

Par exemple, le premier transistor T1 peut être maintenu ouvert en permanence, non pas grâce à un pilotage spécifique assuré par le dispositif de commande 16, mais plutôt en neutralisant le premier interrupteur T1 pour le bloquer dans l'état ouvert.

Par exemple, le premier transistor T1 est déconnecté du dispositif de commande 16 et l'électrode de commande du premier transistor T1 est maintenu à une tension électrique permettant de bloquer le premier transistor T1 dans l'état ouvert.

Selon un autre exemple, le premier transistor T1 est retiré du module 36, ce dernier n'autorisant alors le passage du courant que par la première diode D1.

Dans ces exemples, le premier transistor T1 reste donc toujours ouvert sans avoir besoin d'être piloté par le dispositif de commande 16 ni même sans avoir besoin d'être connecté à ce dernier. Les étapes 60, 62 et 64 décrites ci-dessus sont alors adaptées en conséquence.

Ces exemples permettent de mettre facilement en œuvre l'invention sur des systèmes existants. Par exemple, de tels systèmes peuvent être assemblés à partir de sous-ensembles modulaires achetés sur étagère. Pour éviter d'avoir à construire un tel système de toutes pièces, il suffit de partir d'un sous-ensemble correspondant par exemple au dispositif 14 et d'en neutraliser le premier interrupteur T1.

Toute caractéristique de l'un des modes de réalisation décrite ci-dessus peut être mise en œuvre dans les autres modes de réalisation et variantes décrits.

## Revendications

1. Système d'alimentation électrique (4), notamment pour un véhicule électrique (2), comportant un premier dispositif d'alimentation en énergie électrique (20), une pile à combustible (24) et un dispositif de conversion de puissance (14) apte à alimenter électriquement une charge électrique (6), le dispositif de conversion de puissance comprenant un bus d'alimentation (52) et un convertisseur de puissance (34), dans lequel :
- le premier dispositif d'alimentation (20) est raccordé au bus d'alimentation (52),
- la pile à combustible (24) est raccordée au bus d'alimentation (52) par l'intermédiaire du convertisseur de puissance (34),
- le convertisseur de puissance (34) inclut au moins une première diode (D1), et
- le système d'alimentation (4) et notamment le dispositif de conversion de puissance est configuré pour forcer un courant fourni par la pile à combustible (24), lorsqu'elle est utilisée comme source d'énergie pour alimenter le dispositif de conversion de puissance (14), à passer par ladite première diode (D1) ;
et dans lequel :
- soit le convertisseur de puissance (34) comporte un premier interrupteur de puissance (T1), la première diode (D1) connectée en parallèle avec le premier interrupteur de puissance (T1), un deuxième interrupteur de puissance (T2) et une deuxième diode (D2) connectée en parallèle avec le deuxième interrupteur de puissance (T2), la première diode (D1) étant configurée pour empêcher le retour du courant vers la pile à combustible (24), et dans lequel le système d'alimentation électrique (4) est configuré pour maintenir le premier interrupteur de puissance (T1) dans un état électriquement ouvert tant que la pile à combustible (24) alimente le dispositif de conversion de puissance (14),
- soit le convertisseur de puissance (34) comporte la première diode (D1) connectée en série avec un ensemble formé d'un interrupteur de puissance (T2) et d'une deuxième diode (D2) connectés en parallèle, la première diode étant connectée électriquement entre la pile à combustible et le bus d'alimentation et dans lequel le convertisseur de puissance est dépourvu d'interrupteur de puissance connecté en parallèle de la première diode.

2. Système selon la revendication 1, dans lequel le système d'alimentation électrique (4) comporte en outre un dispositif électronique de commande (16) des premier et deuxièmes interrupteurs de puissance (T1, T2), le dispositif électronique de commande étant configuré pour maintenir le premier interrupteur de puissance (T1) dans l'état électriquement ouvert tant que la pile à combustible (24) alimente le dispositif de conversion de puissance (14).

3. Système selon la revendication 1 ou la revendication 2, dans lequel le système d'alimentation électrique (4) est configuré pour maintenir le premier interrupteur de puissance (T1) dans l'état électriquement ouvert uniquement tant que la pile à combustible (24) alimente le dispositif de conversion de puissance (14).

4. Système selon la revendication 1, dans lequel le premier interrupteur de puissance (T1) est configuré pour rester en permanence dans l'état électriquement ouvert.

5. Système selon la revendication 4, dans lequel le système d'alimentation électrique (4) comporte en outre un dispositif électronique de commande (16) des premier et deuxièmes interrupteurs de puissance (T1, T2), le premier interrupteur de puissance (T1) étant déconnecté du dispositif électronique de commande (16) et une électrode de commande du premier interrupteur de puissance (T1) étant maintenue à une tension électrique de maintien du premier interrupteur de puissance (T1) dans l'état électriquement ouvert.

6. Système selon la revendication 1, dans lequel une des bornes de la pile à combustible (24) est connectée à un point milieu entre la première diode et la deuxième diode par l'intermédiaire d'un conducteur comportant une inductance (40).

7. Système selon l'une quelconque des revendications précédentes, dans lequel le convertisseur de puissance (34) est un hacheur élévateur de tension.

8. Véhicule électrique (2), notamment ferroviaire, comportant une charge électrique, telle qu'un moteur d'une chaîne de traction, et un système d'alimentation électrique (4) pour alimenter ladite charge électrique, **caractérisé en ce que** le système d'alimentation électrique (4) est selon l'une quelconque des revendications précédentes.

## Revendications modifiées

### Revendications modifiées conformément à la règle 137(2) CBE.

1. Système d'alimentation électrique (4), notamment pour un véhicule électrique (2), comportant un premier dispositif d'alimentation en énergie électrique (20), une pile à combustible (24) et un dispositif de conversion de puissance (14) apte à alimenter électriquement une charge électrique (6), le dispositif de conversion de puissance comprenant un bus d'alimentation (52) et un convertisseur de puissance (34), dans lequel :
- le premier dispositif d'alimentation (20) est raccordé au bus d'alimentation (52),
- la pile à combustible (24) est raccordée au bus d'alimentation (52) par l'intermédiaire du convertisseur de puissance (34),
- le convertisseur de puissance (34) inclut au moins une première diode (D1), et
- le système d'alimentation (4) et notamment le dispositif de conversion de puissance est configuré pour forcer un courant fourni par la pile à combustible (24), lorsqu'elle est utilisée comme source d'énergie pour alimenter le dispositif de conversion de puissance (14), à passer par ladite première diode (D1) ;
et dans lequel :
- le convertisseur de puissance (34) comporte un premier interrupteur de puissance (T1), la première diode (D1) connectée en parallèle avec le premier interrupteur de puissance (T1 ), un deuxième interrupteur de puissance (T2) et une deuxième diode (D2) connectée en parallèle avec le deuxième interrupteur de puissance (T2), la première diode (D1) étant configurée pour empêcher le retour du courant vers la pile à combustible (24), et dans lequel le système d'alimentation électrique (4) est configuré pour maintenir le premier interrupteur de puissance (T1) dans un état électriquement ouvert tant que la pile à combustible (24) alimente le dispositif de conversion de puissance (14).

2. Système selon la revendication 1, dans lequel le système d'alimentation électrique (4) comporte en outre un dispositif électronique de commande (16) des premier et deuxièmes interrupteurs de puissance (T1, T2), le dispositif électronique de commande étant configuré pour maintenir le premier interrupteur de puissance (T1) dans l'état électriquement ouvert tant que la pile à combustible (24) alimente le dispositif de conversion de puissance (14).

3. Système selon la revendication 1 ou la revendication 2, dans lequel le système d'alimentation électrique (4) est configuré pour maintenir le premier interrupteur de puissance (T1) dans l'état électriquement ouvert uniquement tant que la pile à combustible (24) alimente le dispositif de conversion de puissance (14).

4. Système selon la revendication 1, dans lequel le premier interrupteur de puissance (T1) est configuré pour rester en permanence dans l'état électriquement ouvert.

5. Système selon la revendication 4, dans lequel le système d'alimentation électrique (4) comporte en outre un dispositif électronique de commande (16) des premier et deuxièmes interrupteurs de puissance (T1, T2), le premier interrupteur de puissance (T1 ) étant déconnecté du dispositif électronique de commande (16) et une électrode de commande du premier interrupteur de puissance (T1) étant maintenue à une tension électrique de maintien du premier interrupteur de puissance (T1) dans l'état électriquement ouvert.

6. Système selon la revendication 1, dans lequel une des bornes de la pile à combustible (24) est connectée à un point milieu entre la première diode et la deuxième diode par l'intermédiaire d'un conducteur comportant une inductance (40).

7. Système selon l'une quelconque des revendications précédentes, dans lequel le convertisseur de puissance (34) est un hacheur élévateur de tension.

8. Véhicule électrique (2), notamment ferroviaire, comportant une charge électrique, telle qu'un moteur d'une chaîne de traction, et un système d'alimentation électrique (4) pour alimenter ladite charge électrique, **caractérisé en ce que** le système d'alimentation électrique (4) est selon l'une quelconque des revendications précédentes.
